Europäisches Patentamt

European Patent Office

Office européen des brevets

(11) Veröffentlichungsnummer : **0 115 776 B1**

# EUROPÄISCHE PATENTSCHRIFT

(45) Veröffentlichungstag der Patentschrift :
**11.11.87**

(51) Int. Cl.⁴ : **G 11 B 15/60**

(21) Anmeldenummer : **84100141.5**

(22) Anmeldetag : **09.01.84**

(54) **Laufwerk für einen Videorecorder.**

(30) Priorität : **07.01.83 DE 3300303**
**07.01.83 DE 3300378**

(43) Veröffentlichungstag der Anmeldung :
**15.08.84 Patentblatt 84/33**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**DE-A- 1 462 120**
**DE-A- 3 040 016**
**DE-B- 1 004 039**
**DE-B- 1 031 984**
**FR-A- 2 281 607**
**FR-A- 2 373 853**
**GB-A- 1 039 261**
**US-A- 2 894 702**
**US-A- 2 919 314**
**US-A- 3 658 227**
**US-A- 3 697 676**
**US-A- 3 943 566**
**US-A- 3 996 619**
**IBM TECHNICAL DISCLOSURE BULLETIN, Band 17, Nr. 4, September 1974, Seite 1188, New York, US; R.C.DURBECK et al.: "Tape control device"**

(73) Patentinhaber : **Deutsche Thomson-Brandt GmbH Hermann-Schwer-Strasse 3 Postfach 2060 D-7730 Villingen-Schwenningen (DE)**

(72) Erfinder : **Schandl, Hartmut Egerstrasse 2 D-7732 Villingen-Schwenningen (DE)**

## Beschreibung

In bekannten Video-Magnetbandgeräten nach dem Schräg-Spurverfahren wird das Magnetband schraubenlinienförmig in einem fest vorgegebenen Schraubungswinkel um die Kopftrommel geführt. Dabei liegt das Magnetband mit einer Kante auf einer Zylinderführung, auch Lineal genannt, der Kopftrommel auf. Die Kopftrommelanordnung ist in einem bestimmten Winkel schräg zur Grundplatte gestellt, um die durch die Schraubung gegebene Höhendifferenz des Bandes zwischen Anfang und Ende der Umschlingung an der Kopftrommel auszugleichen, und eine Bandführung zu erreichen, die ein im wesentlichen verzerrungsfreies Bandspannungsprofil zwischen Vorratsspule und Wickelspule ergibt.

Dazu ist es notwendig, das Band mit Hilfe von Umlenkmitteln, die meist als Stifte oder Rollen ausgebildet sind, aus der Kassette zu ziehen und in Spielposition zu bringen. Üblicherweise übernehmen auch diese Stifte die Positionsierung des Bandes im Spielbetrieb, so daß sie ihre Endposition mit sehr hoher Genauigkeit einnehmen müssen. Ein Justieren der Anschläge für diese Stifte ist daher unbedingt notwendig, wobei diese Einstellung über die gesamte Lebensdauer des Gerätes erhalten bleiben muß.

Aus der DE-OS 3 040 016 ist ein Bandlauf-System bekannt, bei dem das Band an Ein- und Auslauf zur Kopftrommel durch geneigte, gerade Stifte geführt wird. Die Stifte stehen in einem fest vorgegebenen Winkel zur Kopftrommelachse, so daß das Band automatisch der Zylinderführung der Kopftrommel folgt.

Aus der DE-OS 1 462 120 ist ferner ein Bandlaufsystem bekannt, bei dem sich das Band nicht auf einem Lineal, sondern auf mehrere getrennte Führungsteile im Bereich der Kopftrommel mit einer Kante abstützt. Diese Führungsteile ragen zum Teil in eine umlaufende Nut der Kopftrommel. Für eine Verstellung der Lage des Magnetbandes relativ zur Kopftrommel sind Führungsteile vorgesehen, die als Federn ausgebildet sind und mit der sich drehenden Kopftrommel in Kontakt stehen.

Es ist Aufgabe der Erfindung, ein Laufwerk für einen Videorecorder mit einer Bandführung zu schaffen, durch die das Magnetband im Spielbetrieb selbsttätig die richtige Position einnimmt. Diese Aufgabe wird durch die im Anspruch 1 angegebene Erfindung gelöst. Weiterbildungen der Erfindung sind in den Unteransprüchen beschrieben.

Die Erfindung besteht im Prinzip darin, daß die zur Einfädelmechanik gehörenden Umlenkelemente als Kipp- oder Pendelstifte ohne seitliche, das Magnetband führende Flansche ausgebildet sind. Diese Stifte haben eine zylindrische oder kegelige Hülse, die in ihrer in Axialrichtung gemessenen Mitte punktförmig aufgehängt ist und in einer Ebene beweglich zu dem ortsfesten inneren Teil gelagert ist. Wird das Magnetband derart um die Hülse geführt, daß die Magnetbandmitte ausserhalb des Kippunktes oder der Pendelachse der Hülse an dem Stift liegt, nimmt die Hülse eine derartige Lage ein, daß das Band die Tendenz zeigt, quer zur Bandlaufrichtung entlang des Stiftes in jene Richtung zuzuleiten, die eine Verschiebung der Bandmittellinie weiter weg vom Kippunkt der Hülse bewirkt. Der Abstand zwischen der Mitte des Magnetbandes und dem Kippunkt der Hülse bestimmt dabei in Verbindung mit dem Bandzug die Kraftkomponente quer zur Bandlaufrichtung. Im Kopftrommelbereich wird das Magnetband von Führungsstiften geleitet, die ortsfest vor der Einlaufstelle und nach der Auslaufstelle der Kopftrommel senkrecht zur Bandlaufrichtung angeordnet sind. Diese Führungsstifte sind an ihrem oberen Ende mit einem Flansch versehen, an dessen Innenkante sich eine Kante des Magnetbandes zur Höhenführung abstützt. Durch die Pendelstifte wird das Magnetband automatisch an die Flansche der Führungsstifte angelegt. Etwa mittig am Umschlingungsumfang an der Kopftrommel liegt das Magnetband mit seiner anderen Kante auf einem weiteren ortsfesten Führungsteil auf. Ein Vorteil der beschriebenen Bandführung besteht darin, daß durch die Pendelstifte etwaige Bandführungsfehler ausgeglichen werden. Dadurch wird über die Breite des Magnetbandes gesehen eine gleichmäßige Spannung (Bandspannungsprofil) innerhalb des Magnetbandes aufgebaut, wodurch ein Flattern des Magnetbandes vermieden wird.

Als weiterer Vorteil muß erwähnt werden, daß der zur Einfädelmechanik gehörende Pendelstift, der in Verbindung mit der Einfädelmechanik beweglich zum Chassis angeordnet ist, in seiner Spielposition keiner genauen Justierung bedarf, da er sich selbst optimal einstellt. Damit entfallen die teuren justierbaren Anschläge. Vorteilhafterweise werden die Äste vor und hinter den Pendelstiften mechanisch entkoppelt. Dadurch wirken sich Ungenauigkeiten in der Bandführung außerhalb der Abtasteinheit nicht auf die Spur- oder Abtasttreue aus.

Nachstehend soll anhand der Figuren 1-5 ein Ausführungsbeispiel der Erfindung erläutert werden :

Fig. 1 zeigt den Verlauf der Bandführung in einem erfindungsgemäßen Laufwerk,

Fig. 2 zeigt in einer vereinfachten Seitendarstellung die Führung des Magnetbandes im Kopftrommelbereich,

Fig. 3 zeigt den Ausschnitt eines Laufwerkes mit der Schnittlinie A-B,

Fig. 4 zeigt die teilweise Darstellung in Seitenansicht eines Schnittes A-B, wie in Fig. 3 angedeutet und

Fig. 5 zeigt in Schnittdarstellungen die erfindungsgemäße Ausführung eines Umlenkstiftes.

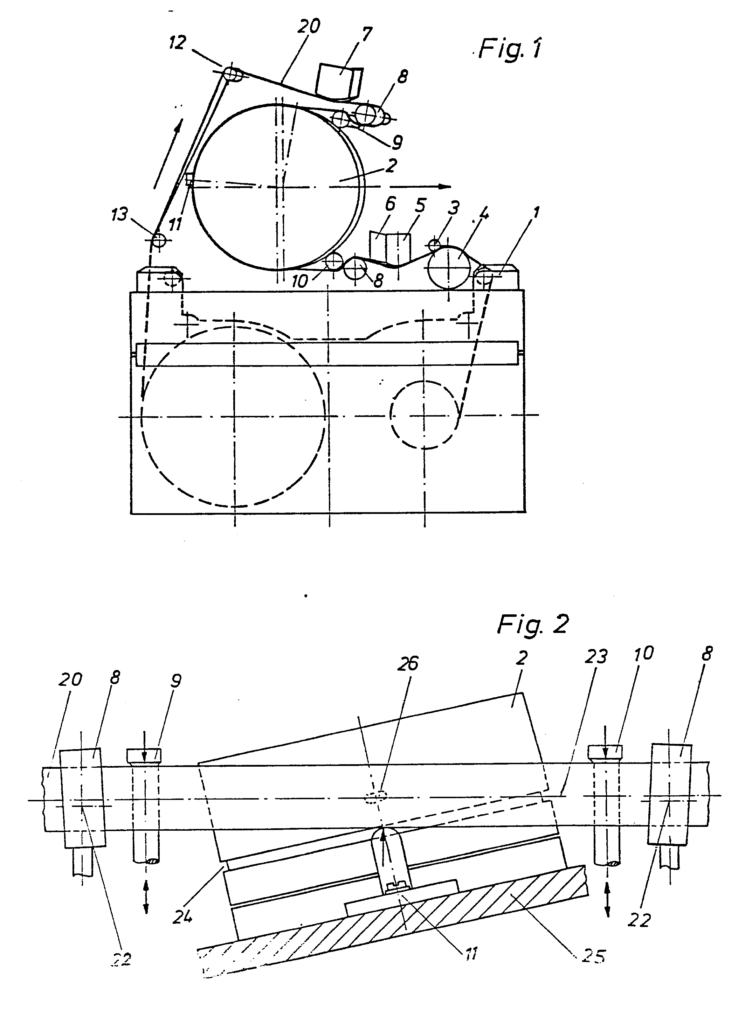

In Fig. 1 ist ein Laufwerk mit eingelegter Videokassette 1 dargestellt. Eine Gummiandruckrolle 4, die Umlenkstifte 8, eine Umlenkrolle 12 und Bandzugfühler 13 haben das Magnetband 20 aus der Videokassette 1 herausgezogen und über die Führungsstifte 9 und 10 an die Kopftrommel 2 so angelegt, daß das Magnetband 20 die Kopftrommel 2 schraubenförmig bei etwa mittiger Unterstützung durch ein ortsfestes Führungsteil 11 umschlingt. Das Magnetband 20 wird durch die Gummiandruckrolle 4 an die Kapstanwelle 3 gedrückt und läuft an einem Audiokopf 5, einem Audiolöschkopf 6 und einem Gesamtlöschkopf 7 vorbei. Das Magnetband 20 wird im Normalbetrieb von der linken Abwickelspule zur rechten Aufwickelspule der Videokassette 1 transportiert. Bandtransportrichtung und Drehrichtung der Kopftrommel 2 stimmen beim Normalbetrieb (Hinlauf) überein.

In Fig. 2 ist eine geneigt gelagerte einteilige Kopftrommel 2 dargestellt, die von dem Magnetband 20 schraubenlinienförmig umschlungen wird. Die Zuführung des Magnetbandes 20 erfolgt über je einen Umlenkstift 8 und die Bandführungsstifte 9 und 10. Das Magnetband 20 ist so geführt, daß es durch die Ausrichtung der Umlenkstifte 8 mit der einen Kante automatisch an den Flanschen der Führungsstifte 9 und 10 anliegt. Die andere Magnetbandkante liegt auf dem bei etwa halbem Umschlingungsumfang angeordneten ortsfesten Führungsteil 11 auf. Durch diese Anordnung wird eine Dreipunktlagerung für das Magnetband 20 im Bereich der Kopftrommelumschlingung ermöglicht. Die Umlenkstifte 8 sind mit einer um einen Kippunkt 22 knapp unterhalb der Magnetbandmittellinie 23 angeordneten zylindrischen Hülse versehen. Durch den Bandzug werden diese zylindrischen Hülsen derart ausgerichtet, daß bei jeder Bandgeschwindigkeit die obere Bandkante sich automatisch an die Flansche der Führungsstifte 9, 10 anlegt.

Bei der dargestellten einteiligen Kopftrommel 2 ragt das Führungsteil 11, auf dem sich die Magnetbandunterkante abstützt, in eine umlaufende Nut 24 hinein, ohne die Kopftrommel 2 zu berühren. Das Führungsteil 11 ist am Laufwerkchassis 25 befestigt und kann für Justierzwecke in seiner relativen Mittellage zum Umschlingungsumfang verstellt werden. Für den Hinlauf kann das Band so justiert werden, daß der Kopf 26 genau die gewünschten Spuren abtastet. Bei veränderten Bandgeschwindigkeiten ist dies aber nicht der Fall. Durch eine gegensinnige Höhenverstellung der Führungsstifte 9 und 10 kann der Schraubungswinkel im Bereich der Kopftrommelumschlingung nun derart geändert werden, daß je nach Stellung der Führungsstifte 9 und 10 durch den oder die Magnetköpfe 26 Magnetspuren mit anderm Spurwinkel geschrieben oder abgetastet werden können.

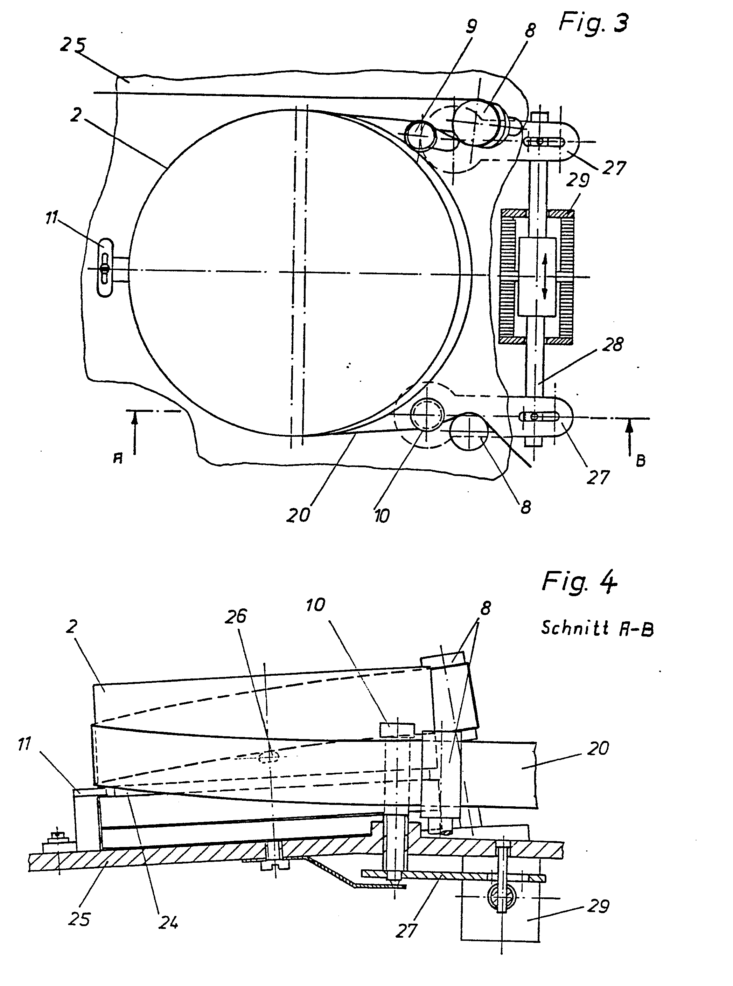

In Fig. 3 und 4 wird eine Vorrichtung für die Verstellung der Führungsstifte 9 und 10 gezeigt. Durch gegensinnige Höhenverstellung der Sitfte 9 und 10 wird eine Änderung des Schraubungswinkels des Magnetbandes 20 um die Kopftrommel 2 bewirkt. Die Führungsstifte 9 und 10 werden in gegenläufigen Gewindebuchsen geführt und sind mit Schwenkhebeln 27 verbunden, die über eine Schubstange 28 von einem elektrodynamischen Wandler 29 angetrieben werden. Der Wandler 29 wird von Signalen gesteuert, die im Wiedergabebetrieb ähnlich wie in « Grundig Technische Informationen » 3-1980 Nr. 3 beschrieben, aus vorher aufgezeichneten Kontrollsignalen gewonnen werden. Die Einstellung der Führungsstifte 9 und 10 kann aber auch durch die Betätigungsmittel für die Änderung der Bandgeschwindigkeit bewirkt werden, wobei vorjustierte Rastpositionen für korrekte Spurlage sorgen. Bei Bedarf kann eine zusätzliche kontinuierlich gesteuerte Nachjustierung verwendet werden.

Die Verstellwege der Stifte 9, 10 sind abhängig von der Geschwindigkeit, mit der sich das Magnetband 20 in Längsrichtung bewegt. Bei n-facher Geschwindigkeit muß der Verstellweg n Spurbreiten betragen, d. h. der eine Stift muß um $n/2$ Spurbreiten in die eine Richtung und der andere Stift um $n/2$ Spurbreiten in die andere Richtung verschoben werden. Dies gilt z. B. für Vor- und Rücklauf in gegensätzliche Richtungen.

Durch die selbsttätige Ausrichtung der Pendelstifte 8 bei Verstellung der Stifte 9 und 10 ist sichergestellt, daß die Bandführung auch bei veränderten Bandgeschwindigkeiten optimal eingestellt ist.

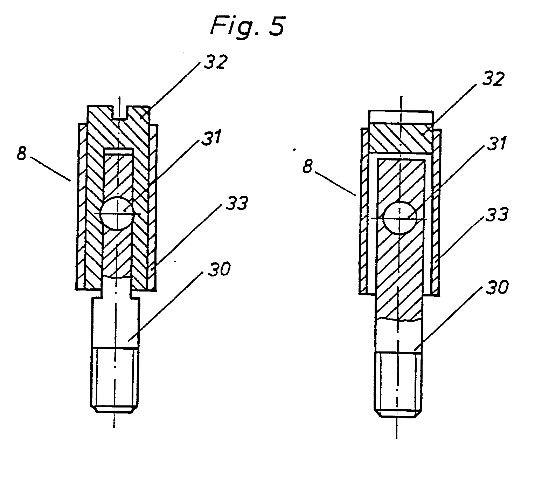

In Fig. 5 ist in Schnittdarstellungen die erfindungsgemäße Ausführung eines Umlenkstiftes 8 dargestellt. Ein metallischer, an einem Ende beidseitig in einer Ebene, mittig zur Achse abgeflachter Stift 30 mit einem für die Befestigung vorgesehenen Gewinde, trägt im abgeflachten Teil in einer, in der Mitte der Fläche angebrachten Bohrung, eine metallische Kugel 31. Der Durchmesser der Kugel ist so gewählt, daß sie aus dem abgeflachten Teil des Stiftes 30 beidseitig herausragt. Ein zylindrisches Kunststoffteil 32 mit einer in Achsmitte dem abgeflachten Teil des Metallstiftes 30 angepaßten Ausnehmung, ist mit seinen Schenkeln über den mit der Kugel 31 versehenen abgeflachten Teil des Stiftes 30 geschoben. Dabei werden die Schenkel durch die Einwirkung der Kugel 31 gespreizt. Eine metallische Hülse 33, deren Innendurchmesser derart ausgebildet ist, das sie sich ohne Spiel über das Kunststoffteil 32 schieben läßt, wird über das Kunststoffteil 32 geschoben. Die Schenkel des Kunststoffteils 32 werden stramm auf die Kugel 31 gedrückt, so daß die Kugel 31 in das Kunststoffteil 32 eingepreßt wird. Dadurch ergibt sich eine in einer Achse punktförmige Lagerung für die Hülse 33. Durch die Wahl des Außendurchmessers des Kunststoffteils 32 im Verhältnis zum Durchmesser des Metallstiftes 30 ist die Größe einer möglichen Auslenkung festgelegt.

**Patentansprüche**

1. Laufwerk für einen Videorecorder mit einer von einem Magnetband (20) schraubenlinienförmig umschlungenen Kopftrommel (2), mit einem am Umfang der Kopftrommel (2) angeordneten, ortsfesten, das Magnetband (20) an seiner ersten Kante abstützenden ersten Führungsteil (11) zweiten und dritten Führungsteilen (9, 10) und Umlenkstiften (8), dadurch gekennzeichnet, dass die zweiten und dritten Führungsteile (9, 10) vor der Einlaufstelle und nach der Auslaufstelle des Magnetbandes (20) zur Kopftrommel (2) vorgesehen sind, daß die Umlenkstifte (8) im Weg des Magnetbandes (20) zu dem zweiten und dritten Führungsteil (9, 10), liegen daß die Umlenkstifte (8) mit einer zylindrischen Hülse (33) ausgestattet sind, die um einen Kippunkt (22) schwenkbar ist, der in Richtung zur ersten Kante des Magnetbandes (20) zu dessen Mittellinie (23) versetzt liegt, wobei die Hülsen (33) durch den Bandzug derart ausgerichtet werden, daß das Magnetband (20) mit seiner zweiten Kante an dem zweiten und dritten Führungsteil (9, 10) anliegt.

2. Laufwerk nach Anspruch 1, dadurch gekennzeichnet, daß die Umlenkstifte (8) einen mittig zu ihrer Achse beidseitig abgeflachten Stift (30) mit einem zur indirekten Befestigung am Chassis (25) dienenden Teil, insbesondere einem Gewindeteil, enthalten, daß der Stift (30) im abgeflachten Teil eine eine Kugel (31) aufnehmende Bohrung aufweist, die beidseitig über den abgeflachten Teil hinausragt, daß ein im wesentlichen zylindrisches Kunststoffteil (32) mit einer in Achsmitte vorgesehenen, dem abgeflachten Teil des Stiftes (30) angepaßten Ausnehmung vorgesehen ist, dessen Schenkel über den mit der Kugel (31) versehenen abgeflachten Teil geschoben ist, und daß über die so verbundenen Teile (30, 31, 32) die Hülse (33) derart ohne Spiel geschoben ist, daß die Kugel (31) in die Schenkel des Kunststoffteils (32) eingepreßt und die Hülse (33) relativ zu dem Stift (33) um dem Kippunkt (22) schwenkbar ist.

3. Laufwerk nach Anspruch 1, dadurch gekennzeichnet, daß das zweite und dritte Führungsteil (9, 10) als parallel zur Bandfläche und im wesentlichen senkrecht zur Bandlaufrichtung angeordnete Führungsstifte ausgebildet sind, die jeweils am oberen Ende einen Flansch aufweisen, dessen Unterseite die Abstützung für die zweite Kante des Magnetbandes (20) bildet.

## Claims

1. A drive for a video recorder having a head drum (2) round which a magnetic tape (20) is wrapped helically, having a stationary first guide member (11) which is disposed at the circumference of the head drum (2) and supports the magnetic tape (20) at its first edge, second and third guide members (9, 10) and guide pins (8), characterised in that the second and third guide members (9, 10) are provided before the point of entry and after the point of exit of the magnetic tape (20) to and from the head drum (2), that the guide pins (8) lie in the path of the magnetic tape (20) to the second and third guide members (9, 10), that the guide pins (8) are equipped with cylindrical sleeve (33) which is pivotable about a tilting point (22) which, in the direction of the first edge of the magnetic tape (20) is offset in relation to its centre line (23), the sleeves (33) being aligned by the tape tension in such a manner that the magnetic tape (20) bears with its second edge against the second and thrid guide members (9, 10).

2. A drive as claimed in Claim 1, characterised in that the guide pins (8) contain a pin (30) which is flattened at both sides centrally in relation to its axis with a portion, particularly a threaded portion, serving for the indirect securing to the chassis (25), that the pin (30) comprises, in the flattened portion, a bore which receives a ball (31) and which projects beyond the flattened portion at both sides, that a substantially cylindrical plastics member (32) having a recess provided in the axial centre and adapted to the flattened portion of the pin (30) is provided, the shank of which is pushed over the flattened portion provided with the ball (31), and that the sleeve (33) is pushed, without play, over the parts thus connected (30, 31, 32) in such a manner that the ball (31) is pressed into the shanks of the plastics member (32) and the sleeve (33) is pivotable in relation to the pin (33) about the tilting point (22).

3. A drive as claimed in Claim 1, characterised in that the second and third guide members (9, 10) are constructed in the form of guide pins which are disposed parallel to the tape surface and substantially perpendicular to the direction of travel of the tape and which each comprise a flange at the upper end, the under side of which forms the support for the second edge of the magnetic tape (20).

## Revendications

1. Mécanisme de défilement pour un magnétoscope, avec un tambour (2) enroulé hélicoïdalement par une bande magnétique (20), avec un premier élément de guidage (11) aménagé de manière fixe sur le pourtour du tambour (2) et supportant le premier bord de la bande magnétique (20), avec un deuxième et troisième élément de guidage (9, 10) et des doigts de déviation (8) ; caractérisé par le fait que les deuxième et troisième éléments de guidage (9, 10) sont prévus avant l'entrée et après la sortie de la bande magnétique (20) du tambour (2) ; que des doigts de déviation (8) se situent sur le parcours allant aux deuxième et troisième éléments de guidage (9, 10) ; que les doigts de déviation (8) sont équipés d'une douille cylindrique (33) pivotant autour d'un point de basculement (22) qui se situe en direction du premier bord de la bande magnétique (20), décalé par rapport à la ligne médiane (23) de la bande, les douilles (33) étant alignées par la traction de la bande magnétique (20) de telle sorte que le deuxième bord de la bande magnétique (20) repose contre les deuxième et troisième éléments de guidage (9, 10).

2. Mécanisme de défilement selon revendication 1, caractérisé par le fait que les doigts de déviation (8) comportent un doigt (30) aplati bilatéralement de manière centrée par rapport à l'axe, avec un élément servant à la fixation indirecte sur le châssis (25), en particulier un élément taraudé ; que le doigt (30) porte dans sa partie aplatie une bille (31) qui dépasse des deux côtés la partie aplatie ; qu'un élément cylindrique essentiellement en plastique (32) est prévu, avec un évidement aménagé sur le centre de l'axe et adapté à la partie aplatie du doigt (30), ses branches étant glissées sur l'élément aplati où loge la bille (31), et que sur ces éléments ainsi reliés (30, 31, 32) se glisse la douille (33) sans aucun jeu, afin que la bille (31) soit enchâssée dans les branches de l'élément plastique (32), et que la douille (33) pivote par rapport au doigt (30) autour du point de basculement (22).

3. Mécanisme de défilement selon revendication 1, caractérisé par le fait que les deuxième et troisième éléments de guidage (9, 10), sont conçus en tant que doigts disposés en parallèle par rapport à la surface de la bande magnétique (20) et essentiellement verticaux par rapport au sens de marche de la bande, les extrémités supérieures présentant une collerette dont la face inférieure soutient le second bord de la bande magnétique (20).

Fig. 1

Fig. 2

0 115 776

Fig. 3

Fig. 4

Schnitt A-B

## Fig. 5